(19) Europäisches Patentamt

European Patent Office

Office européen des brevets

(11) **EP 1 992 393 A1**

(12) **EUROPEAN PATENT APPLICATION**

(43) Date of publication:
**19.11.2008 Bulletin 2008/47**

(21) Application number: **07009687.0**

(22) Date of filing: **15.05.2007**

(51) Int Cl.:
*B01D 21/01* (2006.01)     *C09C 1/02* (2006.01)
*C09C 3/04* (2006.01)     *C09D 5/02* (2006.01)
*D21H 17/00* (2006.01)     *D21H 21/02* (2006.01)
*C02F 1/00* (2006.01)

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Mondo Minerals B.V.**
**1041 AR Amsterdam (NL)**

(72) Inventors:
• **Schoelkopf, Joachim**
**8956 Killwangen (CH)**

• **Gantenbein, Daniel**
**4145 Gempen (CH)**
• **Gane, Patrick A.C.**
**4852 Rothrist (CH)**

(74) Representative: **van Kooij, Adriaan**
**Arnold & Siedsma**
**Sweelickplein 1**
**2517 GK The Hague (NL)**

(54) **Method for controlling the shape of talc particles**

(57)     The present invention is directed to a method for controlling the $d_{50}$ particle size and the specific surface area SSA of talc particles by the steps of a) providing an aqueous suspension of coarse talc, b) breaking down the talc particles in a homogeniser, c) delaminating the talc particles in a ball mill, the particles obtainable by this method and their use.

*Figure 2*

**Description**

The present invention is directed to a method for controlling the shape of talc particles in terms of the $d_{50}$ particle size and the specific surface area SSA of these particles, the particles obtainable by this method and their use.

Talc is a common magnesium silicate mineral having the chemical formula $Mg_3Si_4O_{10}(OH)_2$. It occurs as foliated masses having an extraordinary basal cleavage, the resulting folia being non-elastic, although slightly flexible. It is sectile and very soft, with a hardness of 1, thus being the softest of the Mohs' scale of mineral hardness.

Due to its hydrophobic character and very good adsorption properties regarding organic substances, talc is very useful in several industries, e.g. in ceramics production, as a lubricant or filler, e.g. in the plastics and paper industry, as a carrier in pharmaceutical or cosmetic preparations and many more.

An important role in most of these applications plays the sandwich structure of talc, which upon delamination provides a large active surface area. The thickness of one single "sandwich" of octahedral magnesium oxygen/hydroxyl layer between two tetrahedral silicon-oxygen layers is about 1 nm. Untreated individual talc particles usually contain several hundreds of such sandwiches. The size of such multi-sandwich particles can be over 100 μm, and determines the talc's lamellarity. A highly lamellar macrocrystalline talc has large individual platelets, whereas a microcrystalline compact talc's platelets are much smaller. By delamination of these sandwiches the active surface area of the talc consequently may be significantly enlarged.

The delamination of phyllosilicates such as talc is known for a long time, and is usually carried out by grinding.

In WO 98/45374 a process for treating a lamellar type mineral consisting of talc in the form of particles consisting of stacks of elementary leaves is described with a view to obtaining a functional filler in powder form for a polymeric material, which combines fine particle size distribution of the predefined type and a high lamellarity, the method comprising 5 steps: (a) suspending the mineral having an initial particle size with a median diameter $d_{50}$ greater than 5 microns in a liquid; (b) subjecting the suspension to a delamination operation by wet grinding so as to produce a separation of the leaves of the particles and so as to obtain a particle size less than the initial particle size; (c) then subjecting the suspension to a selection operation, so as to eliminate the particles with a size greater than a predetermined size; (d) drying the suspension; and (e) treating the mineral particles so as to limit the creation of strong irreversible bonds between them. Thus, not only a selection step is necessary according to WO 98/45374, which is carried out in a turbine selector (centrifuging of the suspension in a turbine provided with selection slits) or in a hydrocyclone (creation of a vortex for separation and selection) or in a centrifuge with an endless extraction screw (centrifuging of the suspension in a bowl and separation by extraction screw). In addition, further essential steps d) and e), i.e. drying the suspension and submitting the resulting powder to a special treatment are obligatory in the process of WO 98/45374 for obtaining the desired product. Consequently, the method described in this document requires a time-consuming procedure of 5 steps involving a considerable, service intensive equipment, and rejects.

From US 3,039,703, a method of reducing the size of particles is known, comprising forcing a liquid slurry of said particles under pressure against a bed of said particles in a cavity in the face of a valve. More particularly, this document describes an improved apparatus for reducing the particle size of lamellar minerals such as talc, and an improved valve used therein. However, from this general disclosure it can not be taken as to how the particle size $d_{50}$ or specific surface area can be controlled, let alone the combination of these parameters.

US 3,307,790 describes a method of mineral froth flotation and a method, and an apparatus for simultaneously conditioning and selectively delaminating laminar mineral particles such as talc or mica in a pulp of such mineral particles in order to remove interlayer impurities from said laminar particles and expose fresh surfaces of the laminar mineral for contact with the flotation reagents and bubbles and thereby affect through froth flotation better separation of said laminar minerals from the pulp at a high purity. In this respect it is also mentioned that conventional grinding techniques such as a ball mill primarily grind the laminar particles into smaller laminar particles rather than primarily and selectively delaminating them as with the conditioning means described therein, wherein also the apparatus described in the above-mentioned document US 3,039703 can be used.

Thus, both of the documents US 3,039,703 and US 3,307,790 only relate to the delamination of talc, whereas there is no disclosure or teaching as to how the $d_{50}$ and/or the specific surface area can be controlled.

Consequently, all of the afore-mentioned documents describe the delamination of talc or the reduction of its particle size by wet grinding or homogenising. However, none of these documents describes a controlled method for obtaining talc particles of a specific surface area on the one hand and a specific particle size on the other hand, or only by using a selection step, which is not only time consuming and equipment intensive, but also produces considerable rejects.

Therefore, it is an object of the present invention to provide a method for controlling the $d_{50}$ particle size and the specific surface area SSA of talc particles, as well as the particles obtainable by this method, and their use.

The solution according to the present invention is defined by the features of the independent claims. Preferred embodiments are described in the dependent claims and the following description.

During a dividing process talc crystallites can be influenced dramatically. An efficient delamination leading to large platelets also known as exfoliation with high surface areas may be achieved e.g. by ball mills. On the other hand, it was surprisingly found that dividing talc with the homogeniser gives small broken platelets without essentially influencing the specific surface area, and that by combining these technologies, the $d_{50}$ particle size and the specific surface area (SSA) can be controlled as desired in a novel manner.

Thus, according to the present invention the above defined problem of controlling the $d_{50}$ particle size and the specific surface area SSA of talc particles is solved by a method comprising the steps of

a) providing an aqueous suspension of coarse talc,
b) breaking down the talc particles in a homogeniser, and
c) delaminating the talc particles in a ball mill.

According to the present invention it is preferred that step b) is carried out before step c). However, in another preferred embodiment, also step c) can be carried out before step b).

The shape of the talc particles is characterised by their specific surface area (SSA) and particle size distribution (PSD) in terms of the $d_{50}$ particle size.

For the purposes of the present invention, the SSA is defined as the total surface area per unit of mass and is determined by the BET sorption method according to ISO 9277. The SSA can be measured with any equipment suitable for determining the SSA.

For example, a TriStar 3000 Surface Area and Porosimetry Analyser (Micromeritics[®]) can be used, optionally with a sample preparation system such as the SmartPrep system, a fully automatic sample preparation and degas system (Micromeritics[®]).

The TriStar 3000 Analyser uses physical adsorption and capillary condensation principles to obtain information about the surface area and porosity of a solid material. The sample contained in an evacuated sample tube is cooled to cryogenic temperature, then is exposed to analysis gas at a series of precisely controlled pressures. With each incremental pressure increase, the number of gas molecules adsorbed on the surface increases. The equilibrated pressure (P) is compared to the saturation pressure ($P_0$) and their relative pressure ratio ($P/P_0$) is recorded along with the quantity of gas adsorbed by the sample at each equilibrated pressure.

As adsorption proceeds, the thickness of the adsorbed film increases. Any micropores in the surface are filled first, then the free surface becomes completely covered, and finally the larger pores are filled by capillary condensation. The process may continue to the point of bulk condensation of the analysis gas. Then, the desorption process may begin in which pressure systematically is reduced resulting in liberation of the adsorbed molecules. As with the adsorption process, the changing quantity of gas on the solid surface at each decreasing equilibrium pressure is quantified. These two sets of data describe the adsorption and desorption isotherms. Analysis of the shape of the isotherms yields information about the surface and internal pore characteristics of the material.

The $d_{50}$ particle size is the median value, which divides the mass distribution curve into two regions of equal volume or weight, so that 50 % by volume or weight of the particle population have a diameter above the $d_{50}$ value, and 50 % by volume or weight of the particle population have a diameter below the $d_{50}$ value. The particle size distribution providing the $d_{50}$ value can be determined by any method and equipment being suitable therefor. For the purposes of the present invention, it was determined by the Malvern method relating to volume %.

For the Malvern method, a MasterSizer S (Malvern Instruments Ltd.) can be used, which is a modular particle size analyser based on laser diffraction particle size analysis. It can measure spray droplet size as well as wet and dry samples. This method also permits the determination of the particle size distribution of powder and slurry products, respectively, in the range of 0.05 to 900 $\mu$m by means of laser diffraction. For the purposes of the present invention the particle size distribution was carried out by means of laser light (He-Ne), wherein the measurement can be executed dry and/or wet, with two different automation equipments, the spectrum being covered by two optical lenses, lens 300 F for dry measurement of powder products in the range of 0.5 to 900 $\mu$m, and lens 300 RF for wet measurement of slurry and powder products in the range of 0.05 to 900 $\mu$m, respectively.

Slurry and powder samples can be measured without a special pre-dispersion. Spray-dried powder samples have to be dispersed by means of an external ultrasound instrument or high speed mixer. Powder products can be measured directly by means of dry automation.

For controlling the $d_{50}$ particle size and the specific surface area SSA of talc particles according to the method of the present invention, the talc is provided in an aqueous suspension in step a), broken down in a homogeniser in step b) and delaminated in a ball mill in step c), wherein steps b) and c) are interchangeable.

It was surprisingly found that the use of the homogeniser, although applying high shear to the particles, does not predominantly produce a delamination effect to the talc mineral, but rather an effect of finely dividing the talc particles.

It was found that the longer the talc particles are subjected to the treatment with the homogeniser, the smaller the particles will be until a certain size is reached. Thus, breaking down the talc particles in a homogeniser according to step b) of the invention particularly allows for the control of the $d_{50}$ value.

The SSA predominantly is controlled by the delamination according to step c), while the particle size $d_{50}$ is less influenced by delamination. The delamination step effects an increase of the SSA.

Preferably, the extent of breaking down and delamination is controlled by the homogenising and milling time, respectively.

Consequently, for example, at the same milling time, but different homogenising times, there will be particles with similar SSAs, but with distinctly different particle sizes. Thus, if particles having essentially the same SSA but higher or lower $d_{50}$ values are desired, this is achieved by a shorter or longer treatment time, respectively, in the homogeniser.

On the other hand, if, e.g. a material having a high SSA, but a small $d_{50}$ value is desired, than it will be preferred to subject the material to a longer homogenising time until the desired particle size is reached, and to subsequently subject these particles to milling in order to increase the SSA without essentially further reducing the particle size.

This adjustment of, e.g. a small particle size at a high SSA can be very useful, for example in pitch control, where talc particles having a certain SSA are more efficient at a lower particle size than at a higher particle size.

As delamination reduces the number of elementary layers in a platelet and thus increases the flexibility of the platelet, it is preferred that the homogenising step is carried out before the delamination step.

However, in another embodiment of the invention it may also be preferred to first delaminate and then break down the talc particles in the homogeniser.

Talcs which are useful in the present invention are any commercially available talcs of different origins.

Generally, talc deposits result from the transformation of existing rocks by hydrothermal fluids carrying one or several of the components needed to form the mineral ($MgO$, $SiO_2$, $CO_2$).

In the formation of talc deposits tectonics plays a major role. It enables hydrothermal fluids to penetrate the rock, creating micro-permeability that facilitates reactions. The shape and size of talc deposits depend on the intensity of the hydrothermal activity, which corresponds to the climate of a low to medium temperature metamorphism. Concurrent activity of pressure and deformation permit the transformation. The pressure and deformation ratios determine the cristallinity of the talc ore deposit.

Talc deposits differ according to the parent rock from which they are derived. Each ore has its own geological signature formed many millions of years ago. As a natural ore, talc is always found in combination with at least one other mineral, such as chlorite, dolomite and magnesite, amphibole, biotite, olivine, pyroxene, quartz and serpentine.

Four main deposit categories exist which differ in:

- their mineralogical composition
- their colour, which is measured in terms of whiteness or brightness
- their crystalline structure, which is either platy or compact.

Accordingly, the following main groups of ores can be distinguished:

1. Magnesium carbonate ores: The talc evolves from the transformation of carbonates (dolomite and magnesite) in the presence of silica. The carbonates fix in-situ the magnesium, which is needed to form the mineral whereas the silica is provided by hydrothermal circulation. This reaction results in talc which is either mineralogical pure or associated with minerals such as carbonates, quartz and chlorite. Deposits in this vein provide the whitest and purest talc ores. Examples of this kind of deposits are Yellowstone (Montana USA), Respina (Spain), Three Springs (Australia) and Haicheng (China).

2. Serpentine derivate ores: The talc comes from the transformation of serpentine into a mixture of talc and magnesium carbonate. This ore is commonly called "soapstone". It is never pure and always grey. When using it as an industrial mineral, it is often upgraded by flotation to increase its talc content and whiteness. This type of deposit is relatively common and widely distributed along ultra-mafic rock belts. The term mafic is a shortening of the terms magnesium and iron. Ultra-mafic rocks are igneous rocks with silica content less than 45 wt.-%, generally more than 18 wt.-% magnesium oxide and high iron oxide content. Deposits belonging to this category are currently being mined in Vermont (USA), Quebec and Ontario (Canada) and Sotkamo (Finland).

3. Siliceous derivate ores: Talc results from the transformation of siliceous rocks which provide the silica needed for the formation of the minerals. Chlorite can be formed in addition to the talc, the resulting ore is a mixture of both. This variant of deposit can be found in association with the magnesium carbonate derivate type for example in the French Pyrenees (France).

4. Magnesium sedimentary deposit derivate ores: Although this form can be found in high concentrations, the talc ores are always found with impurities such as quartz, clay, organic materials and iron hydroxides.

For the present invention any of these four talc ore types and combinations thereof can be used. Preferred are magnesium carbonate ores (Australia and China) and serpentine derivate ores (Finland) or combinations thereof.

Also useful in the present invention may be talcs from Germany, Florence (Italy), Tyrol (Austria), Shetland (Scotland), Transvaal (South Africa), the Appalachians, California, and Texas (USA).

The composition and purity of the talcs useful in the present invention were analysed by methods well-known in the art, namely X-ray fluorescence (XRF) (ARL 9400 Sequential XRF) and X-ray diffraction (XRD) (from 5-100° 2theta Bragg diffraction using a Bruker AXS D8 Advanced XRD system with CuK$\alpha$ radiation, automated divergence slits and a linear position-sensitive detector. The tube current and voltage were 50 mA and 35 kV, respectively: the step size was 0.02° 2theta and the counting time 0.5 s $\cdot$ step$^{-1}$).

Preferred for the use in the present invention are talcs having a content of pure talc of > 50 weight-%, preferably > 70 weight-%, more preferably > 80 weight-%, especially > 90 weight-%, for example > 95 weight-% or > 98 weight-% and up to > 100 weight-%.

The coarse talc particles used as the starting material in the present invention may have a $d_{50}$ of up to 100 $\mu$m, e.g. 5 to 70 $\mu$m, preferably 10 to 60 $\mu$m, more preferably 15 to 40 $\mu$m, particularly 20 to 30 $\mu$m, e.g. 6, 13 or 17 $\mu$m.

The SSA of the starting material is depending on the talc employed and can be between 30 and 0.01 m$^2$/g, preferably between 18 m$^2$/g and 1 m$^2$/g more preferably between 12 m$^2$/g and 2 m$^2$/g, especially between 3 and 5 m$^2$/g, for example 0.02 m$^2$/g.

Especially useful as starting material in the present invention are talcs coming from Sotkamo (Finland) being of serpentine origin and having a talc content of > 95 weight-%, a $d_{50}$ of about 17 $\mu$m and a SSA of about 3 m$^2$/g, from Three Springs (Australia) being of magnesium carbonate origin and having a talc content of > 95 weight-%, a $d_{50}$ of about 6 $\mu$m and a SSA of about 12 m$^2$/g, and from Haicheng (China) being of magnesium carbonate origin and having a talc content of > 98 weight-%, a $d_{50}$ of about 13 $\mu$m and a SSA of about 2 m$^2$/g.

The coarse talc starting material preferably is suspended in an aqueous medium.

The suspension may further comprise additives such as dispersants and fluidisers. Fluidisers make a system more liquid i.e. lower the viscosity. Dispersants may have the same function, but also act stabilizing preventing settling, which is no prerequisite for a fluidiser. Dispersants and fluidisers which may be used in the present invention are e.g. self-decomposing polyphosphate allowing for a higher solids content due to lower viscosity. Also, cationic and/or amphoteric dispersant may be used such as polymers and/or copolymers based on cationic monomers such as quaternary ammonium compounds and optionally anionic monomers such as monocarboxylic acid compounds like monocarboxylic ethylenically unsaturated monomers such as preferably acrylic acid monomers, and optionally non-ionic monomers such as unsaturated ethylenically unsaturated esters, acrylamides and their derivatives.

The additives may be added in an amount of 0.1 to 5 wt.-%, preferably 0.5 to 2 wt.-%, e.g. 1 wt.-%.

The talc solids content of the suspension preferably is from 5 to 40 wt.-%, more preferably 7 to 30 wt.-%, especially 10 to 20 wt.-%, for example 11 wt.-% based on the total weight of the suspension.

For breaking down the talc, the talc suspension is subjected to a treatment with a homogeniser.

Suitable for the use in the present invention are any commercially available homogenisers, especially high pressure homogenisers, wherein the suspensions or emulsions are pressed under high pressure through a restricted opening, which may comprise a valve, and are discharged from the restricted opening at high pressure against a hard impact surface directly in front of the restricted opening, thus reducing the particle size. The pressure may be generated by a pump such as a piston pump, and the impact surface may comprise an impact ring extending around the annular valve opening. One example for homogenisers which can be used in the present invention is Ariete NS2006L of NIRO SOAVI. However, inter alia, also homogenisers such as of the APV Gaulin Series, HST HL Series or the Alfa Laval SHL Series can be used.

For obtaining broken down material, in the homogeniser, pressures of above 100 bar should be used, e.g. from 500 to 2000 bar, preferably from 600 to 1500 bar, more preferably from 700 to 1000 bar, particularly from 750 to 900 bar, e.g. 800 bar.

The delaminating step is a wet grinding step, wherein advantageously a mill selected from the group comprising conventional horizontal and vertical ball mills, pearl mills, attritor mills, planetary mills and rod mills is used. Generally, all mills can be used, which are capable of delaminating talc particles.

The grinding media are preferably selected from the group comprising grinding balls, pellets and quartz sand.

If grinding balls are used, they are preferably made of a materials such as glass, cerium and/or yttrium stabilised zirconium dioxide, zirconium dioxide and zirconium silicate. Also, plastic balls can be useful in the present invention, such as balls made of polyoxymethylene (POM) or polystyrene (PS), as well as pellets, e.g. made of iron (Cyplex). It is also possible to use blends of the afore-mentioned grinding media.

In a preferred embodiment, the grinding balls have a diameter of 0.1 to 5 mm, preferably 0.2 to 3 mm, more preferably 0.5 to 2 mm, especially 1.0 to 1.6 mm, for example 1 mm.

The selection of different grinding media and sizes thereof as well is an important criterion for an optimised efficiency in a mill.

It has further been found that the talc obtainable by the method of the present invention has specific properties such as an increased brightness compared with talcs produced by delamination only, and a steep particle size distribution.

Therefore, it is a further object of the present invention to provide talc which is obtainable by the method of the present invention.

The particle size distribution of the talc according to the invention determined by the Malvern method as described has advantageously low steepness values, i.e. is very steep.

High steepness is desirable with respect to the use of a well-defined product. For example a narrow particle size distribution is especially useful, if certain properties such as brightness, etc. are a function of a specific particle size. Then, it is desirable that the particle size distribution is steep, i.e. that the percentage of particles having the desired particle size is as high as possible, i.e. the particle size distribution curve should be steep.

The steepness according to the present invention is defined by the formula:

$$\mathrm{Steepness} = \frac{d_{75} - d_{25}}{d_{50}}$$

According to this formula, the talcs obtained by the method of the present invention may have a steepness of e.g. 0.6 to 1.9, preferably from 0.8 to 1.5, more preferably from 0.9 to 1.2, most preferably from 0.95 to 1.15, e.g. from 1 to 1.1.

In this respect, talcs which were first subjected to step c) and subsequently to step b) may provide for an especially steep particle size distribution. Generally, at a given milling time, the steepness value decreases with the homogenizer treatment time. For example, at a milling time of 60 min., and subsequent breaking down of the particles in a homogenizer the steepness value can be decreased from 1.18 to 0.88, i.e. by 25 % within 60 min.

If step b) is carried out before step c), the steepness values are generally higher. However, also the steepness values obtained in this embodiment are in an advantageous range.

Thus, steps like size classification, which are time-consuming and require a further process step and cost-intensive equipment can be avoided, as the method of the present invention not only allows for a controlled adjustment of the $d_{50}$ value and SSA, but also provides talc having a steep particle size distribution.

Furthermore, the brightness of the talc particles according to the invention is superior to tales obtained by conventional delamination or particle size reduction alone.

Usually, breaking down talc particles in a homogenizer provides for a constant increase of the brightness, the longer the particles are treated, whereas delaminating the particles only results in a decrease of brightness.

Surprisingly, by combining these treatments a strong increase in brightness can be achieved, such that it is possible, e.g. to obtain brighter particles by combining the treatments than by milling alone without essentially influencing the SSA, which is highly favourable in any application where particles with a high SSA are needed e.g. for their adsorption capability at the same time having a high brightness, e.g. in paper applications.

Due to the improved properties of the talc particles obtainable by the method of the present invention, also the use of this talc in several applications is a solution of the present invention.

Thus, it can be advantageously used as a filler or pigment in any industries, where talc is usually employed, especially in the paper or plastics production, where a certain shape and structure as well as brightness is desirable. For example, it can be used as a filler or pigment, as well as for pitch control.

There are also other applications, where the talc according to the invention may be employed, e.g. in barrier coating in paints.

Due to its excellent adsorption properties, it is furthermore useful for the clarification of liquids such as beverages, or in waste water treatment.

The following figures, examples and tests will illustrate the present invention, but are not intended to limit the invention in any way.

Description of the figures:

Figures 1a (logarithmic x-axis) and 1b (normal scaled x-axis) show the particle size distribution curves of a Finnish talc treated with a ball mill and in combination with a homogeniser.

Figure 2 illustrates the product characteristics of Finnish talc in terms of $d_{50}$ and SSA values, which can be achieved by using a homogeniser, a ball mill and a combination of both.

Figure 3    illustrates the product characteristics of Chinese and Australian talc in terms of $d_{50}$ and SSA values, which can be achieved by using a homogeniser or a ball mill.

Figure 4    illustrates the product characteristics of Finnish talc in terms of $d_{50}$ and SSA values, which can be achieved by using a homogeniser (HG), a ball mill and a combination of both.

Figure 5    illustrates the brightness characteristics of Finnish talc in terms of R 457 values, which can be achieved by using a homogeniser (HG), a ball mill and a combination of both.

## EXAMPLES:

### 1. Controlling $d_{50}$ and SSA by first homogenising and subsequently milling the talc suspension

A. Preparation of the talc suspension

580 g (solids content 86.2 weight-%) of coarse talc (from Sotkamo, Finland; particle size up to 40 $\mu$m; SSA (BET): 2.9 $m^2$/g) was suspended under stirring (Pendraulik with dissolver stirrer 65mm) in 4420 g of water at 22 °C.
For further experimentation five suspension were prepared as described. One of them was not subjected to homogenising, the others were treated as follows:

B. Breaking down in homogeniser

In a first step the operation was carried out by using a high pressure homogeniser having a 5 litre circuit volume (NIRO SOAVI Ariete NS2006L). The talc suspensions (5000 g) were pumped in a circular flow at 750 bar and a flow rate of 1.5 l/min through the homogenising valve.
The temperature of < 65 ° C, the pH of 8 - 10 and the electrical conductivity of 400 - 1000 $\mu$s/cm of the suspension were continuously controlled.
After 0 min., 15 min., 30 min., 45 min. and 60 min. homogenising time, respectively, the products were recovered by taking a slurry sample of 2500 g and analysed. For BET measurement the sample was dried for 48 h at 120 °C, ground with a mortar (which had no influence on the $d_{50}$ and SSA) and then analysed by Malvern Master Sizer S for its particle size distribution, by TriStar 3000 for its specific surface area (BET) and by Malvern MasterSizer S (3$$D Presentation (Fraunhofer)) to check that substantially no delamination has occurred.
The results are shown in table 1:

Table 1:

| Homogeniser treatment time [min.] | Ball Mill treatment time [min.] | SSA (BET) [$m^2$/g] | $D_{50}$ (Malvern) [$\mu$m] | $D_{75}$ (Malvern) [$\mu$m] | $D_{25}$ (Malvern) [$\mu$m] | Steepness |
|---|---|---|---|---|---|---|
| 0 | 0 | 2.9 | 18.2 | 28 | 8.5 | 1.07 |
| 15 | 0 | 6 | 9.3 | 15.5 | 5.5 | 1.08 |
| 30 | 0 | 7 | 7.7 | 12 | 4.6 | 0.96 |
| 45 | 0 | 8 | 6.4 | 9.8 | 4 | 0.91 |
| 60 | 0 | 10 | 5.6 | 8.3 | 3.3 | 0.89 |

C. Delaminating in ball mill

Subsequently, in a second step the untreated talc suspension (2500 g) as well as the talc suspensions treated with the homogeniser for 15 and 60 min. were delaminated with a ball mill of the Dynomill type Multi Lab having a 600 ml grinding chamber. A charge of glass balls with a volume of approximately 80% was introduced into the grinding chamber. The diameter of the balls was 1.2 - 1.4 mm. The talc suspension was fed into the grinder by a pump with an eccentric screw at a flow rate of 400 ml/min.
The temperature of < 65° C, the pH of 8 - 10 and the electrical conductivity of 400 - 1000 $\mu$s/cm of the suspension were continuously controlled.

After 0 min., 60 min., 120 min., 180 min. and 240 min. milling time, respectively, the products were recovered by taking a slurry sample and analysed. For BET measurement the sample was dried for 48 h at 120 °C, ground with a mortar (which had no influence on the $d_{50}$ and SSA) and then analysed by Malvern Master Sizer S (3$$D Presentation (Fraunhofer)) for its particle size distribution, by TriStar 3000 for its specific surface area (BET) and by Malvern MasterSizer S to check delamination.

The results are shown in tables 2, 3 and 4:

Table 2:

| Homogeniser treatment time [min.] | Ball Mill treatment time [min.] | SSA (BET) [m²/g] | $D_{50}$ (Malvern) [μm] | $D_{75}$ (Malvern) [μm] | $D_{25}$ (Malvern) [μm] | Steepness |
|---|---|---|---|---|---|---|
| 0 | 0 | 2.9 | 18.2 | 28 | 8.5 | 1.07 |
| 0 | 60 | 17 | 15 | 25 | 8.5 | 1.10 |
| 0 | 120 | 31 | 12.5 | 21 | 7.1 | 1.11 |
| 0 | 180 | 45 | 11.3 | 20 | 6.7 | 1.18 |
| 0 | 240 | 60 | 9.2 | 16.1 | 5.2 | 1.18 |

Table 3:

| Homogeniser treatment time [min.] | Ball Mill treatment time [min.] | SSA (BET) [m²/g] | $D_{50}$ (Malvern) [μm] | $D_{75}$ (Malvern) [μm] | $D_{25}$ (Malvern) [μm] | Steepness |
|---|---|---|---|---|---|---|
| 15 | 0 | 6 | 9.3 | 15.5 | 5.5 | 1.08 |
| 15 | 60 | 18 | 10.3 | 17.5 | 6.1 | 1.11 |
| 15 | 120 | 36 | 11.5 | 19 | 7 | 1.04 |
| 15 | 180 | 53 | 10.2 | 17 | 5.9 | 1.09 |
| 15 | 240 | 73 | 8.8 | 15 | 5 | 1.14 |

Table 4:

| Homogeniser treatment time [min.] | Ball Mill treatment time [min.] | SSA (BET) [m²/g] | $D_{50}$ (Malvern) [μm] | $D_{75}$ (Malvem) [μm] | $D_{25}$ (Malvern) [μm] | Steepness |
|---|---|---|---|---|---|---|
| 60 | 0 | 10 | 5.6 | 8.3 | 3.3 | 0.89 |
| 60 | 60 | 27 | 6.5 | 10 | 4 | 0.92 |
| 60 | 120 | 45 | 8 | 14 | 4.8 | 1.15 |
| 60 | 180 | 60 | 7.7 | 14.5 | 4.3 | 1.32 |
| 60 | 240 | 75 | 7.9 | 16 | 4 | 1.52 |

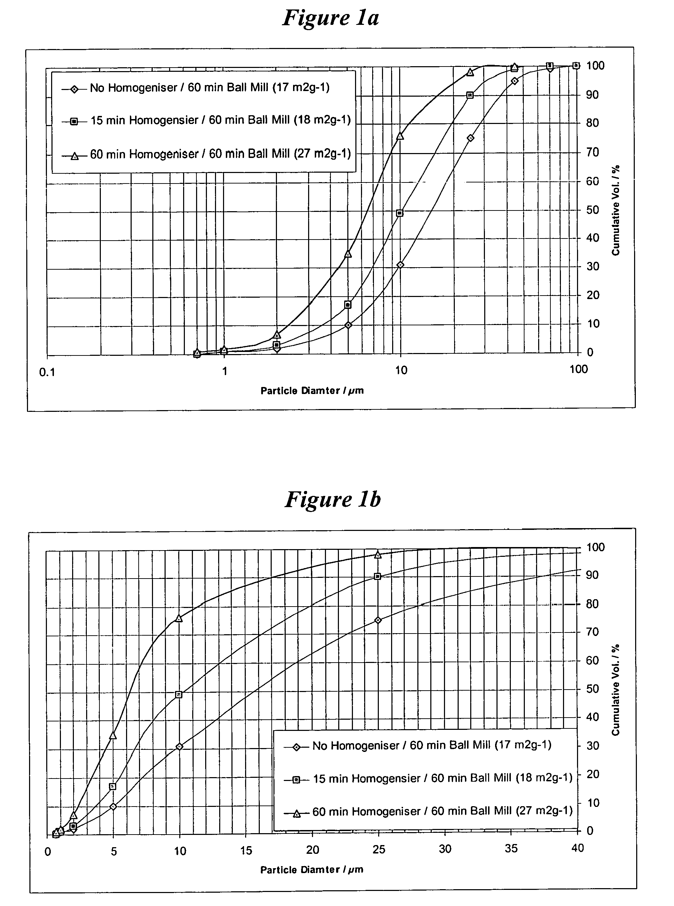

Figures 1a (logarithmic x-axis) and 1b (normal scaled x-axis) show the particle size distribution curves of a samples treated only with a ball mill for 60 min., and additionally with a homogeniser for 15 and 60 min., respectively, determined by Malvern as given in the above tables.

It can be taken from these figures that the treatment with the homogeniser provides for a much steeper particle size distribution than the ball mill treatment. This is important, as the steepness stands for the homogeneity of the treated material with respect to the particle size.

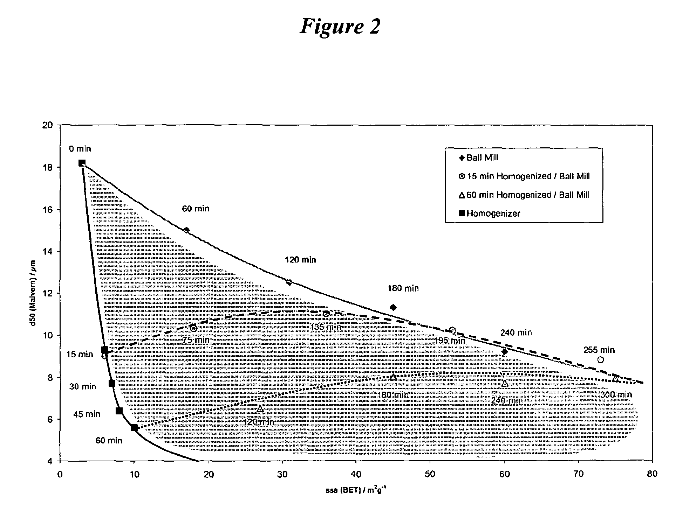

Furthermore, from figure 2 graphically illustrating the results of tables 1 to 4, it can very clearly be taken that by only breaking down talc with the homogeniser the $d_{50}$ values are rapidly decreasing from 16.3 to 5.6 $\mu$m in 60 min., while the SSA does not significantly change until a certain $d_{50}$ value is reached. It increases from 2 to 10 m$^2$/g within 60 min.

Only delaminating the talc suspension in a ball mill without a previous homogenising step leads to an increase of the SSA, which is already 2 times higher than in the case of only homogenising after 60 min., and becomes constantly higher with longer milling times, whereas the SSA does not increase any more after a certain particle size is reached.

In contrast to this, there is only a slight change in the $d_{50}$ values after 60 min., and the $d_{50}$ values also do not significantly decrease after 240 min.

Thus, by combining homogenising and milling step it is possible to control the shape of the talc particles as desired. The longer the homogenising step is carried out the smaller are the $d_{50}$ values, the longer the milling step is carried out the higher is the SSA at nearly the same $d_{50}$, which may be adjusted by a previous homogenising step.

Also, for example, for the same SSA, talc particles my be produced having varying $d_{50}$ values, just as desired.

The number of different possibilities for controlling the shape of the talc particles is very well illustrated by the grey area between the curves of only homogenising and only milling in figure 2 showing that the combination of these methods provides for a number of predeterminable additional talc structures and the control thereof.

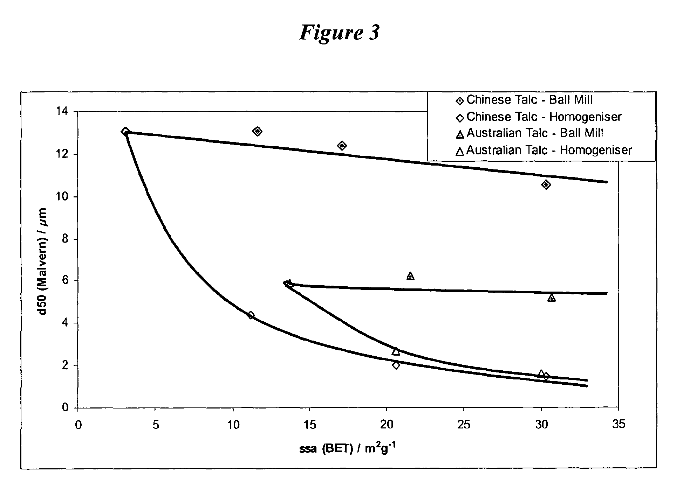

Figure 3 corresponds to figure 2 except for the use of Chinese talc (from Haicheng; $d_{50}$: 13.1 $\mu$m; SSA (BET): 2 m$^2$/g) and Australian talc (from Three Springs; $d_{50}$: 5.9 $\mu$m; SSA (BET): 12 m$^2$/g), respectively, which were treated as described above under A) to C). It can be seen from figure 3 that these talcs show the same behaviour as the above described Finnish talc upon milling and homogenising.

Thus, as in figure 2 the area between the respective homogeniser and ball mill curves of Chinese and Australian talc reflects the combinations of $d_{50}$ and SSA, which can be controlled by combining the steps of homogenising and milling according to the invention.

## 2. Controlling $d_{50}$ and SSA by first milling and subsequently homogenising the talc suspension

### A. Preparation of the talc suspension

1160 g (solids content 86.2 weight-%) of coarse talc (from Sotkamo, Finland; particle size up to 40 $\mu$m; SSA (BET): 2.9 m$^2$/g) was suspended under stirring (Pendraulik with dissolver stirrer 65mm) in 8840 g of water at 22 °C.

For further experimentation five suspension were prepared as described. One of them was not subjected to homogenising, the others were treated as follows:

### B. Delaminating in ball mill

In a first step the resulting talc suspensions (10000 g) were delaminated in a ball mill of the Dynomill type Multi Lab having a 600 ml grinding chamber. A charge of glass balls with a volume of approximately 80% was introduced into the grinding chamber. The diameter of the balls was 1.2 - 1.4 mm. The talc suspension was fed into the grinder by a pump with an eccentric screw at a flow rate of 400 ml/min.

The temperature of < 65 ° C, the pH of 8 - 10 and the electrical conductivity of 400 - 1000 $\mu$s/cm of the suspension were continuously controlled.

After 0 min., 60 min., 120 min., 180 min. and 240 min. milling time, respectively, the products were recovered by taking a slurry sample and analysed. For BET measurement the sample was dried for 48 h at 120 °C, ground with a mortar (which had no influence on the $d_{50}$ and SSA) and then analysed by Malvern Master Sizer S for its particle size distribution, by TriStar 3000 for its specific surface area (BET) and by Malvern MasterSizer S to check delamination.

The results are shown in table 5:

Table 5:

| Ball Mill treatment time [min.] | Homogeniser treatment time [min.] | SSA (BET) [m$^2$g$^{-1}$] | D$_{50}$ (Malvern) [$\mu$m] | D$_{75}$ (Malvern) [$\mu$m] | D$_{25}$ (Malvern) [$\mu$m] | Steepness |
|---|---|---|---|---|---|---|
| 0 | 0 | 2.9 | 18.2 | 28 | 8.5 | 1.07 |
| 60 | 0 | 6.9 | 17.5 | 30.5 | 9.8 | 1.18 |
| 120 | 0 | 11.7 | 16.7 | 29 | 9.5 | 1.17 |
| 180 | 0 | 19.2 | 15.5 | 27 | 9 | 1.16 |

(continued)

| Ball Mill treatment time [min.] | Homogeniser treatment time [min.] | SSA (BET) [$m^2g^{-1}$] | $D_{50}$ (Malvern) [$\mu$m] | $D_{75}$ (Malvern) [$\mu$m] | $D_{25}$ (Malvern) [$\mu$m] | Steepness |
|---|---|---|---|---|---|---|
| 240 | 0 | 26.9 | 14.1 | 24.5 | 8.1 | 1.16 |

The obtained values differ from those of table 2 due to the different amounts of talc, which were treated in the ball mill. However, the tendencies are the same as above.

<u>C. Breaking down in homogeniser</u>

Subsequently, in a second step the untreated talc suspension as well as the talc suspensions treated with the ball mill for 60 min. was subjected to homogenising by using a high pressure homogeniser having a 5 litre circuit volume (NIRO SOAVI Arête NS2006L). The talc suspensions (5000 g) were pumped in circular flow at 750 bar and a flow rate of 1.5 l/min through the homogenising valve.

The temperature of < 65° C, the pH of 8 - 10 and the electrical conductivity of 400 - 1000 $\mu$s/cm of the suspension were continuously controlled.

After 0 min., 15 min., 30 min. and 60 min. homogenising time, respectively, the products were recovered by taking a slurry sample and analysed. For BET measurement the sample was dried for 48 h at 120 °C, ground with a mortar (which had no influence on the $d_{50}$ and SSA) and then analysed by Malvern Master Sizer S for its particle size distribution, by TriStar 3000 for its specific surface area (BET) and by Malvern MasterSizer S to check that substantially no delamination has occurred.

The results are shown in tables 6 and 7:

<u>Table 6:</u>

| Ball Mill treatment time [min.] | Homogeniser treatment time [min.] | SSA (BET) [$m^2g^{-1}$] | $D_{50}$ (Malvern) [$\mu$m] | $D_{75}$ (Malvern) [$\mu$m] | $D_{25}$ (Malvem) [$\mu$m] | Steepness |
|---|---|---|---|---|---|---|
| 0 | 0 | 2.9 | 18.2 | 28 | 8.5 | 1.07 |
| 0 | 15 | 6 | 9.3 | 15.5 | 5.5 | 1.08 |
| 0 | 30 | 7 | 7.7 | 12 | 4.6 | 0.96 |
| 0 | 45 | 8 | 6.4 | 9.8 | 4 | 0.91 |
| 0 | 60 | 10 | 5.6 | 8.3 | 3.3 | 0.89 |

<u>Table 7:</u>

| Ball Mill treatment time [min.] | Homogeniser treatment time [min.] | SSA (BET) [$m^2g^{-1}$] | $D_{50}$ (Malvern) [$\mu$m] | $D_{75}$ (Malvern) [$\mu$m] | $D_{25}$ (Malvern) [$\mu$m] | Steepness |
|---|---|---|---|---|---|---|
| 60 | 0 | 6.9 | 17.5 | 30.5 | 9.8 | 1.18 |
| 60 | 15 | 8.6 | 9.4 | 15 | 5.8 | 0.98 |
| 60 | 30 | 9.9 | 7.7 | 12 | 4.8 | 0.94 |
| 60 | 60 | 12.5 | 5.7 | 8.8 | 3.8 | 0.88 |

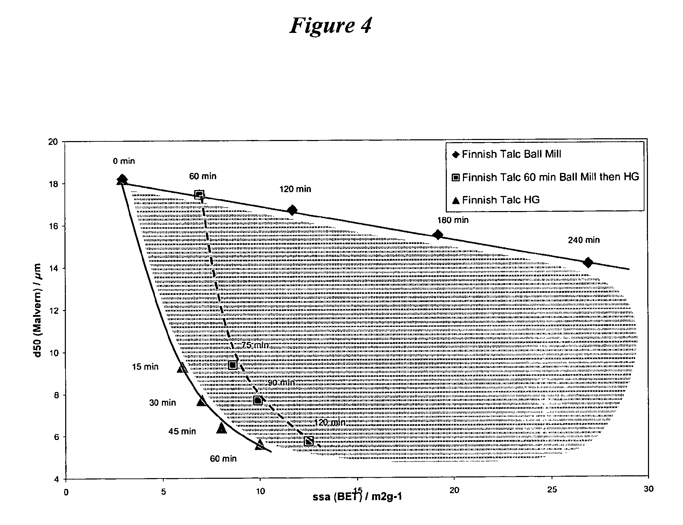

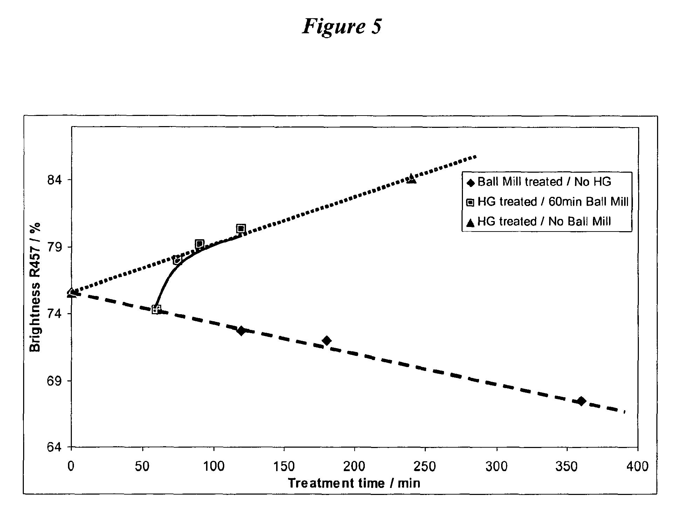

Figure 4 graphically illustrates the results of tables 5 to 7. Comparing figure 2 and 5, and the corresponding values, it comes clear that that the order of steps b) and c) allows for a further possibility of controlling the shape of the talc particles. Looking at the combination of, e.g. 60 min. homogenising and 60 min. milling (see tables 4 and 7), it comes clear that at nearly the same $d_{50}$ values the SSA can be significantly modified by changing the order of steps b) and c), i.e. first homogenising and then milling leads to a markedly higher SSA than the reverse order.

Thus, by milling the talc particles first, a basic SSA range is adjusted depending on the milling time. The particle size is then controlled by the homogenising time, wherein the SSA will be lower than if homogenising would have been done first.

As is the case in figures 2 and 5, the area between the homogenising and milling curves of figure 4 represents the different combination of these methods provides for a number of predeterminable additional talc structures and the control thereof.

Furthermore, it can be taken from these figures that the treatment with the homogeniser subsequent to the treatment in the ball mill provides for a decrease of the steepness value by 25 %, i.e. an improvement regarding the homogeneity of the treated material with respect to the particle size.

This illustrates that the combination of homogenising and milling according to the present invention not only is a combination of known methods, but represents a novel and inventive method using synergistic effects.

### 3. Brightness characteristics of talc particles treated with a combination of homogeniser and ball mill

For checking the brightness characteristics of talc particles broken down with a homogeniser, delaminated with a ball mill and a combination of both treatments Finnish talc (treated as described above) was examined.

The brightness is measured in terms of the ISO brightness R 457 (ISO 2469) with a Datacolor ELREPHO 3300 spectrophotometer using Barium sulphate as a brightness standard (according to DIN 5033).

The starting material had a R457 value of 75.6 %. After 240 min homogenising the value increased to 84.1. When the starting material was treated with a pearl mill the brightness values developed as given in table 8:

Table 8

| Pearl mill treatment time [min] | Brightness R457 [%] |
|---|---|
| 0 | 75.6 |
| 60 | 74.3 |
| 120 | 72.7 |
| 180 | 72.0 |
| 360 | 67.5 |

When the talc was first treated for 60 min with a pearl mill and then with a homogeniser, the brightness could be significantly increased as given in table 9:

Table 9:

| Homogenising time [min] | Brightness R457 [%] |
|---|---|
| 0 | 74.3 |
| 15 | 78.0 |
| 30 | 79.2 |
| 60 | 80.3 |

From figure 5 illustrating the above results, it can be clearly taken that only delaminating the talc particles leads to a decrease of the R 457 value, whereas only breaking down the particles in the homogeniser provides for a constant increase of the brightness, the longer the particles are treated.

By combining these treatments a strong increase in brightness can be achieved, such that it is possible, e.g. to obtain brighter particles by combining the treatments than by milling alone without essentially influencing the SSA, which is highly favourable in any application where particles with a high SSA are needed e.g. for their adsorption capability at the same time having a high brightness, e.g. in paper applications.

**Claims**

1.  Method for controlling the $d_{50}$ particle size and the specific surface area SSA of talc particles comprising the steps of

    a) providing an aqueous suspension of coarse talc,
    b) breaking down the talc particles in a homogeniser, and
    c) delaminating the talc particles in a ball mill.

2.  Method according to claim 1,
    **characterised in that** step b) is carried out before step c).

3.  Method according to claim 1,
    **characterised in that** step c) is carried out before step b).

4.  Method according to any one of claims 1 to 3,
    **characterised in that** the $d_{50}$ value of the talc particles is essentially controlled by step b).

5.  Method according to claim 4,
    **characterised in that** the $d_{50}$ value is essentially controlled by the homogenising time.

6.  Method according to any one of claims 1 to 5,
    **characterised in that** the SSA of the talc particles is essentially controlled by step c).

7.  Method according to claim 6,
    **characterised in that** the SSA is essentially controlled by the milling time.

8.  Method according to any one of claims 1 to 7,
    **characterised in that** the coarse talc is selected from the group comprising magnesium carbonate ores, serpentine derivate ores and siliceous derivate ores.

9.  Method according to claim 8,
    **characterised in that** the coarse talc is selected from the group comprising talc from Sotkamo (Finland), Three Springs (Australia) and Haicheng (China).

10. Method according to any one of claims 1 to 9,
    **characterised in that** the coarse talc has a content of pure talc of > 50 weight-%, preferably > 70 weight-%, more preferably > 80 weight-%, especially > 90 weight-%, for example > 95 weight-% or > 98 weight-% and up to > 100 weight-%.

11. Method according to any one of claims 1 to 10,
    **characterised in that** the coarse talc particles have a $d_{50}$ of up to 100 $\mu$m, e.g. 5 to 70 $\mu$m, preferably 10 to 60 $\mu$m, more preferably 15 to 40 $\mu$m, particularly 20 to 30 $\mu$m, e.g. 6, 13 or 17 $\mu$m.

12. Method according to any one of claims 1 to 11,
    **characterised in that** the coarse talc particles have a SSA of between 30 and 0.01 m$^2$/g, preferably between 18 m$^2$/g and 1 m$^2$/g more preferably between 12 m$^2$/g and 2 m$^2$/g, especially between 3 and 5 m$^2$/g, for example 0.02 m$^2$/g.

13. Method according to any one of claims 1 to 12,
    **characterised in that** additives such as dispersants and fluidisers like self-decomposing polyphosphates, cationic and/or amphoteric dispersant are added to the suspension.

14. Method according to claim 13,
    **characterised in that** said additives are added in an amount of 0.1 to 5 wt.-%, preferably 0.5 to 2 wt.-%, e.g. 1 wt.-%

15. Method according to any one of claims 1 to 14,
    **characterised in that** the talc suspension has a talc solids content of 5 to 40 wt.-%, preferably 7 to 30 wt.-%, more preferably 10 to 20 wt.-%, for example 11 wt.-% based on the total weight of the suspension.

**16.** Method according to any one of claims 1 to 15,
**characterised in that** the homogeniser is selected from the group comprising high pressure homogenisers.

**17.** Method according to claim 16,
**characterised in that** the applied pressure is above 100 bar, e.g. from 500 to 2000 bar, preferably from 600 to 1500 bar, more preferably from 700 to 1000 bar, particularly from 750 to 900 bar, e.g. 800 bar.

**18.** Method according to any one of claims 1 to 17,
**characterised in that** for the delamination step a mill is used, which is selected from the group comprising horizontal and vertical ball mills, pearl mills, attritor mills, planetary mills and rod mills.

**19.** Method according to claim 18,
**characterised in that** for delamination in a ball mill grinding means are used which are selected from the group comprising grinding balls, pellets and quartz sand.

**20.** Method according to claim 19,
**characterised in that** the grinding media are selected from the group comprising balls made of glass, cerium and/or yttrium stabilised zirconium dioxide, zirconium dioxide, zirconium silicate, polyoxymethylene (POM) or polystyrene (PS), pellets, e.g. made of iron (Cyplex), and blends thereof.

**21.** Method according to any one of claims 19 or 20,
**characterised in that** the grinding balls have a diameter of 0.1 to 5 mm, preferably 0.2 to 3 mm, more preferably 0.5 to 2 mm, especially 1.0 to 1.6 mm, for example 1 mm.

**22.** Talc obtainable by the method of any one of claims 1 to 21.

**23.** Talc according to claim 22,
**characterised in that** the particle size distribution of the talc has a steepness of 0.6 to 1.9, preferably from 0.8 to 1.5, more preferably from 0.9 to 1.2, most preferably from 0.95 to 1.15, e.g. from 1 to 1.1.

**24.** Talc according to any one of claims 22 or 23,
**characterised in that** the brightness of the talc particles is higher than the brightness of talcs obtained by steps a) and c) alone.

**25.** Use of the talc according to any one of claims 22 to 24 in the paper and plastics production.

**26.** Use of the talc according to any one of claims 22 to 25 as a filler or pigment.

**27.** Use of the talc according to any one of claims 22 to 25 for pitch control.

**28.** Use of the talc according to any one of claims 22 to 24 as a barrier coating in paints.

**29.** Use of the talc according to any one of claims 22 to 24 for the clarification of liquids such as beverages.

**30.** Use of the talc according to any one of claims 22 to 24 for waste water treatment.

## Figure 1a

## Figure 1b

*Figure 2*

## *Figure 3*

## Figure 4

*Figure 5*

**European Patent Office**

**EUROPEAN SEARCH REPORT**

Application Number

EP 07 00 9687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PEREZ-MAQUEDA L A ET AL: "Preparation of submicron talc particles by sonication" APPLIED CLAY SCIENCE, ELSEVIER SCIENCE, NL, vol. 28, no. 1-4, January 2005 (2005-01), pages 245-255, XP004688119 ISSN: 0169-1317 | 1-21 | INV. B01D21/01 C09C1/02 C09C3/04 C09D5/02 D21H17/00 D21H21/02 C02F1/00 |
| X | "Introduction", "Results and discussions", "Table 1", "Conclusions" ----- | 22,23, 25-28 | |
| X | US 6 348 536 B1 (FOURTY GEORGES [FR] ET AL) 19 February 2002 (2002-02-19) * column 1, line 12 - line 26 * * column 1, line 45 - line 66 * * column 4, line 32 - line 54 * * column 7, line 6 - line 55; example 1; tables 1,2 * ----- | 22,23, 25,26 | |
| X | SVEHLOVA V ET AL: "MECHANICAL PROPERTIES OF TALC-FILLED POLYPROPYLENE INFLUENCE OF FILLER CONTENT, FILLER PARTICLE SIZE AND QUALITY OF DISPERSION" ANGEWANDTE MAKROMOLEKULARE CHEMIE. APPLIED MACROMOLECULAR CHEMISTRY AND PHYSICS, WILEY VCH, WEINHEIM, DE, vol. 214, January 1994 (1994-01), pages 91-99, XP000425493 ISSN: 0003-3146 "Experimental", "Table 1" ----- | 22,23, 25,26 | **TECHNICAL FIELDS SEARCHED (IPC)** B01D C09C C09D D21H C02F |
| X | JP 06 329408 A (UBE INDUSTRIES; KARUSHIIDE KK) 29 November 1994 (1994-11-29) * paragraphs [0006] - [0011], [0019] - [0025]; claims 1,2 * ----- -/-- | 22,23, 25,26 | |

The present search report has been drawn up for all claims

| Place of search | Date of completion of the search | Examiner |
|---|---|---|
| The Hague | 5 October 2007 | CORRIAS, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 00 9687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HASSLER T: "PITCH DEPOSITION IN PAPERMAKING AND THE FUNCTION OF PITCH-CONTROL AGENTS" TAPPI JOURNAL, TECHNICAL ASSOCIATION OF THE PULP & PAPER INDUSTRY. ATLANTA, US, vol. 71, no. 6, 1 June 1988 (1988-06-01), pages 195-201, XP000025653 ISSN: 0734-1415 "pitch control agents, page 195", "Talcum, page 199-200" | 22,23, 26,27 | |
| X | VAHA-NISSI M. ET AL.: "Hydrophobic polymers as barrier dispersion coatings" JOURNAL OF APPLIED POLYMER SCIENCE, vol. 101, 2006, pages 1958-1962, XP002453892 "Materials and procedures", "Results" | 22,23, 26,28 | |
| X | ARSEGUEL D ET AL: "REMOVAL OF PHENOL FROM COUPLING OF TALC AND PEROXIDASE. APPLICATIONFOR DEPOLLUTION OF WASTE WATER CONTAINING PHENOLIC COMPOUNDS" JOURNAL OF CHEMICAL TECHNOLOGY AND BIOTECHNOLOGY, WILEY & SONS, CHICHESTER, GB, vol. 61, no. 4, 1 December 1994 (1994-12-01), pages 331-335, XP000481467 ISSN: 0268-2575 * the whole document * | 22,23, 29,30 | TECHNICAL FIELDS SEARCHED (IPC) |
| D,A | US 3 039 703 A (COHN MORRIS I ET AL) 19 June 1962 (1962-06-19) * column 10, line 12 - column 14, line 16 * | 1-21 | |

-/--

The present search report has been drawn up for all claims

| Place of search | Date of completion of the search | Examiner |
|---|---|---|
| The Hague | 5 October 2007 | CORRIAS, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 00 9687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/234304 A1 (MIAO WEIFANG [US]) 25 December 2003 (2003-12-25) * paragraphs [0005], [0021], [0022], [0030]; figures 4-6 * ----- | 1-21 | |

TECHNICAL FIELDS SEARCHED (IPC)

The present search report has been drawn up for all claims

| Place of search | Date of completion of the search | Examiner |
|---|---|---|
| The Hague | 5 October 2007 | CORRIAS, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 9687

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2007

| Patent document cited in search report | | Publication date | Patent family member(s) | | Publication date |
|---|---|---|---|---|---|
| US 6348536 | B1 | 19-02-2002 | AT | 220088 T | 15-07-2002 |
| | | | AU | 7049898 A | 30-10-1998 |
| | | | DE | 69806364 D1 | 08-08-2002 |
| | | | DE | 69806364 T2 | 06-03-2003 |
| | | | EP | 0971988 A1 | 19-01-2000 |
| | | | ES | 2179482 T3 | 16-01-2003 |
| | | | FR | 2761692 A1 | 09-10-1998 |
| | | | WO | 9845374 A1 | 15-10-1998 |
| JP 6329408 | A | 29-11-1994 | JP | 3079180 B2 | 21-08-2000 |
| US 3039703 | A | 19-06-1962 | BE | 702127 A | 31-01-1968 |
| US 2003234304 | A1 | 25-12-2003 | AU | 2003247596 A1 | 06-01-2004 |
| | | | WO | 2004000450 A2 | 31-12-2003 |
| | | | US | 2005017105 A1 | 27-01-2005 |
| | | | US | 2004241442 A1 | 02-12-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9845374 A
- US 3039703 A

- US 3307790 A